# EUROPÄISCHE PATENTSCHRIFT

(11) **EP 2 876 395 B1**
(45) Veröffentlichungstag und Bekanntmachung des Hinweises auf die Patenterteilung: **26.02.2020**
(21) Anmeldenummer: 14185349.9
(22) Anmeldetag: 18.09.2014
(51) Int. Cl.: F26B 3/06, A01F 25/08, B65D 88/74, F26B 3/28, F26B 9/06, F26B 21/04, F26B 21/08, F26B 21/10, F26B 21/12

(54) **Vorrichtung und Verfahren zum Trocknen von Trocknungsgut**
Method and device for drying material to be dried
Dispositif et procédé de séchage de matières à sécher

(30) Priorität: 22.11.2013 AT 3912013 U
(43) Veröffentlichungstag der Anmeldung: 27.05.2015
(60) Teilanmeldung: 17156316.6
(73) Patentinhaber: Heutrocknung SR GmbH, 5211 Lengau (AT)
(72) Erfinder: Reindl, Josef, 5204 Straßwalchen (AT)
(74) Vertreter: KLIMENT & HENHAPEL

(56) Entgegenhaltungen:
- JP-A- S61 276 683
- US-A- 4 050 164
- US-A- 5 325 604
- US-A- 5 595 000
- US-A1- 2005 246 919
- Anonymous: "Heu mit möglichst wenig Energieaufwand trocknen | BauernZeitung/Technik", , 21. April 2011 (2011-04-21), XP055179098, Gefunden im Internet: URL:http://www.bauernzeitung.at/?+Heu+mit+ moeglichst+wenig+Energieaufwand+trocknen+& id=2500%2C111750%2C%2C%2Cc1F1PSUyMCZjdD00M iZtb2RlPW5leHQmcGFnaW5nPXllc19fNDAmcmVpdGV yPTE0MCZiYWNrPTE%3D [gefunden am 2015-03-25]
- Gotthard Wirleitner ET AL: "Qualitätsheu durch energieeffi ziente Technik", Viehwirtschaftliche Fachtagung, 13. April 2010 (2010-04-13), Seiten 71-80, XP055180191, Gefunden im Internet: URL:http://www.naturland.de/fileadmin/MDB/ documents/Erzeuger/Tagungsbeitraege/Milchv iehhaltertagung_2011/2011_03_02_Wirtleitne r_Vortrag_Gumpenstein_4.10_Wirleitner_Tech niken.pdf [gefunden am 2015-03-30]

## Beschreibung

### GEBIET DER ERFINDUNG

Die vorliegende Erfindung betrifft eine Vorrichtung zum Trocknen von Trocknungsgut gemäß Anspruch 1. Diese Vorrichtung umfasst unter anderem eine Belüftungsbox zur Aufnahme des Trocknungsguts, wobei die Belüftungsbox mit einem Dach überdacht ist, die Vorrichtung weiters umfassend zumindest einen Ventilator, durch welchen Ventilator Luft ansaugbar ist, wobei die angesaugte Luft zumindest teilweise einem Luftentfeuchter zuführbar ist, um die Luft zu entfeuchten, und wobei mittels des mindestens einen Ventilators die Luft schließlich durch die Belüftungsbox, von einem Anfangsbereich zu einem Endbereich der Belüftungsbox blasbar ist, wobei das Trocknungsgut zwischen Anfangsbereich und Endbereich auf einer durch die Luft anströmbaren Boxenfläche anordenbar ist, wobei eine Umschaltklappe vorgesehen ist, die von einer ersten Position in eine zweite Position bewegbar ist, wobei in der ersten Position die Luft durch den mindestens einen Ventilator lediglich aus der Belüftungsbox ansaugbar ist, um einen geschlossenen Luftkreislauf in der Vorrichtung auszubilden, und wobei in der zweiten Position die Luft zumindest teilweise von außerhalb der Belüftungsbox ansaugbar ist, wobei unter dem Dach ein Luftkanal vorgesehen ist, um die in der zweiten Position von außerhalb der Belüftungsbox ansaugbare Luft unter dem Dach entlang zu leiten und Wärmeübertragung zwischen dem Dach und der Luft zu ermöglichen, wobei der Luftentfeuchter einen Verdampfer und einen Kondensator aufweist, wobei die dem Luftentfeuchter zugeführte Luft zumindest teilweise, vorzugsweise vollständig durch den Verdampfer führbar ist. Weiters bezieht sich die vorliegende Erfindung auf ein Verfahren zum Trocknen von Trocknungsgut gemäß Anspruch 10.

### STAND DER TECHNIK

Bei der Trocknung von Trocknungsgut, insbesondere von Heu, das in der Landwirtschaft als ideales Futter für Rinder eingesetzt werden kann, ist es bekannt, Luft zu entfeuchten und durch das Trocknungsgut zu blasen. Hierfür wird das Trocknungsgut in einer Belüftungsbox platziert. Die Luft wird über einen Ventilator angesaugt, einem Luftentfeuchter zugeführt und anschließend in die Belüftungsbox eingeblasen. Um die Trocknung zu beschleunigen, wird die zur Trocknung verwendete Luft angeheizt, wofür beispielsweise eine elektrische Heizung oder ein Hackgutofen verwendet wird. Nachteilig hierbei ist jedoch der hohe Energieeinsatz, der mit der Trocknung einhergeht. Insbesondere wenn sehr große Luftmengen zur Trocknung notwendig sind, kann die Trocknung mitunter nicht mehr wirtschaftlich durchgeführt werden.

Aus dem Stand der Technik ist die GB 2463747 A bekannt, die ein Heiz- und Belüftungssystem für Speicher für verderbliche Güter betrifft. Hierbei wird durch einen Kanal mittels eines Ventilators Luft eingeblasen, um eine gewünschte Luftfeuchtigkeit und Temperatur einzustellen. Der Ventilator ist in einem Gehäuse angeordnet, welches einen schließbaren Einlass aufweist, um wahlweise Luft von außen oder aus dem Inneren des Speichers anzusaugen. Des Weiteren sind Klappen im Speicher vorgesehen, aus denen Luft nach außen entweichen kann, um den Druck im Speicher nicht zu groß werden zu lassen. Weiters sind Heizgeräte vorgesehen, um Luft, die von außen angesaugt worden ist, zu trocknen.

Weiters ist aus dem Stand der Technik die US 1989530 A bekannt, die eine Vorrichtung zur Lagerung von Heu betrifft, wobei auch eine Trocknung erfolgen kann. Dabei wird das Heu in einen Metallbehälter aufgegeben, wobei das Heu auf einem Rost mit Stäben aufliegt. Durch den Rost wird mittels eines Gebläses Luft geblasen, die zuvor gezielt gekühlt oder angewärmt wird. Der Behälter weist vertikal voneinander beabstandete Türen/Öffnungen auf, die geöffnet werden können, um Frischluft zur angewärmten Luft zuzumischen.

Schließlich ist aus G. Wirleitner et al., "Qualitätsheu durch energieeffiziente Technik", 37. Viehwirtschaftliche Fachtagung 2010, 71-80 eine Vorrichtung zur Heutrocknung bekannt, die Vorrichtung umfassend eine Dachabsaugung sowie eine Umschaltklappe, um zwischen Frischluft- und Umluftbetrieb hin und her schalten zu können. Weiters weist die Vorrichtung einen Luftentfeuchter mit einem Verdampfer und einem nachgeschalteten Kondensator auf, wobei der Luft im Verdampfer Wärme entzogen und im Kondensator die vorher entzogene Wärme samt der Abwärme des Antriebsaggregats und der Kondensationswärme zugeführt wird.

### AUFGABE DER ERFINDUNG

Es ist daher Ziel der vorliegenden Erfindung, eine verbesserte Vorrichtung und ein verbessertes Verfahren zur Verfügung zu stellen, welche das Trocknen von Trocknungsgut bei geringem Energieeinsatz und gleichzeitig hohen Luftmengen bzw. hohem Trocknungseffekt erlauben.

### DARSTELLUNG DER ERFINDUNG

Zum Trocknen von Trocknungsgut, vorzugsweise Heu, wird das Trocknungsgut in eine Belüftungsbox zwischen einem Anfangsbereich und einen Endbereich der Belüftungsbox aufgegeben. Die Belüftungsbox schützt das Trocknungsgut vor Witterungseinflüssen von außerhalb der Belüftungsbox und ist entsprechend mit einem Dach ausgestattet. Dabei ist das Trocknungsgut auf einer anströmbaren Boxenfläche angeordnet, wobei die anströmbare Boxenfläche nicht notwendigerweise eine horizontale Fläche sein muss, sondern auch eine vertikale Fläche oder eine schräge Fläche mit einer Neigung zwischen der Horizontalen und der Vertikalen sein kann. Luft zum Trocknen wird mit mindestens einem Ventilator angesaugt und zumindest teilweise einem Luftentfeuchter zugeführt. Anschließend wird die Luft mit dem mindestens einen Ventilator durch die Belüftungsbox, vom Anfangsbereich zum Endbereich geblasen.

Der Erfindung liegt nun die Idee zugrunde, ohnehin vorhandene Wärmequellen gezielt und in kontrollierter Weise auszunutzen, um die Luft für das Trocknen anzuwärmen. Insbesondere soll Luft, die von außen, d.h. von außerhalb der Belüftungsbox, angesaugt wird, mit vorhandenen Wärmequellen angewärmt werden. Vorzugsweise wird für das Anwärmen der von außen angesaugten Luft Sonnenenergie verwendet. Diese Luft wird jedoch nur dann dem Entfeuchter bzw. einem Luftkreislauf in der Belüftungsbox zugeführt, wenn sie warm genug ist, da es sonst zu einer Abkühlung der Lufttemperatur in der Belüftungsbox käme.

Daher ist es bei einer Vorrichtung zum Trocknen von Trocknungsgut, umfassend eine Belüftungsbox zur Aufnahme des Trocknungsguts, wobei die Belüftungsbox mit einem Dach überdacht ist, die Vorrichtung weiters umfassend zumindest einen Ventilator, durch welchen Ventilator Luft ansaugbar ist, wobei die angesaugte Luft zumindest teilweise einem Luftentfeuchter zuführbar ist, um die Luft zu entfeuchten, und wobei mittels des mindestens einen Ventilators die Luft schließlich durch die Belüftungsbox, von einem Anfangsbereich zu einem Endbereich der Belüftungsbox blasbar ist, wobei das Trocknungsgut zwischen Anfangsbereich und Endbereich auf einer durch die Luft anströmbaren Boxenfläche anordenbar ist, wobei eine Umschaltklappe vorgesehen ist, die von einer ersten Position in eine zweite Position bewegbar ist, wobei in der ersten Position die Luft durch den mindestens einen Ventilator lediglich aus der Belüftungsbox ansaugbar ist, um einen geschlossenen Luftkreislauf in der Vorrichtung auszubilden, und wobei in der zweiten Position die Luft zumindest teilweise von außerhalb der Belüftungsbox ansaugbar ist, wobei unter dem Dach ein Luftkanal vorgesehen ist, um die in der zweiten Position von außerhalb der Belüftungsbox ansaugbare Luft unter dem Dach entlang zu leiten und Wärmeübertragung zwischen dem Dach und der Luft zu ermöglichen, wobei der Luftentfeuchter einen Verdampfer und einen Kondensator aufweist, wobei die dem Luftentfeuchter zugeführte Luft zumindest teilweise, vorzugsweise vollständig durch den Verdampfer führbar ist, erfindungsgemäß vorgesehen, dass zwischen Verdampfer und Kondensator eine Wärmequelle angeordnet ist, um die durch den Verdampfer durchgetretene Luft zusätzlich anzuwärmen, und dass ein Sensor zur Messung der Geschwindigkeit der angesaugten Luft vorgesehen ist, der im Luftentfeuchter hinter dem Verdampfer angeordnet ist, und dass Mittel zur Messung einer Außentemperatur der von außerhalb der Belüftungsbox ansaugbaren Luft und/oder einer Innentemperatur der in der Belüftungsbox befindlichen Luft vorgesehen sind.

Vorzugsweise wird zur Steuerung der Umschaltklappe eine Außentemperatur, d.h. die Temperatur der von außerhalb der Belüftungsbox angesaugten Luft, und/oder eine Innentemperatur, d.h. die Temperatur der Luft in der Belüftungsbox, und/oder die Differenz zwischen Außentemperatur und Innentemperatur herangezogen. Entsprechend ist es bei einem Verfahren zum Trocknen von Trocknungsgut erfindungsgemäß vorgesehen, dass eine erfindungsgemäße Vorrichtung verwendet wird und das Trocknungsgut in die Belüftungsbox aufgegeben wird und dass eine Außentemperatur der von außerhalb der Belüftungsbox ansaugbaren Luft gemessen wird, wobei eine Innentemperatur der in der Belüftungsbox befindlichen Luft, vorzugsweise im Endbereich gemessen wird und wobei die Umschaltkappe in Abhängigkeit von der Außentemperatur und/oder der Innentemperatur und/oder der Differenz zwischen der Außentemperatur und der Innentemperatur von der ersten Position in die zweite Position und umgekehrt bewegt wird. Ausführungsformen, bei denen nur die Außentemperatur oder nur die Innentemperatur zur Steuerung der Umschaltklappe herangezogen wird, können sich dabei als besonders einfach im Aufbau erweisen.

Um die Innentemperatur ansteigen bzw. nicht fallen zu lassen, ist es bei einer bevorzugten Ausführungsform des erfindungsgemäßen Verfahrens vorgesehen, dass die Umschaltklappe in die zweite Position bewegt oder in der zweiten Position gehalten wird, wenn die Außentemperatur größer gleich einem Außentemperaturschwellwert ist und/oder wenn die Differenz zwischen Außentemperatur und Innentemperatur größer gleich einem positiven Differenztemperaturschwellwert ist. Grundsätzlich ist es natürlich auch denkbar, dass die Umschaltklappe in die zweite Position bewegt oder in der zweiten Position gehalten wird, wenn die Innentemperatur kleiner gleich einem gewissen Innentemperaturschwellwert ist.

In Versuchen wurden Außentemperaturschwellwerte und positive Differenztemperaturschwellwerte ermittelt, welche ein zügiges Aufschaukeln der Innentemperatur ergeben. Demgemäß ist es bei einer besonders bevorzugten Ausführungsform des erfindungsgemäßen Verfahrens vorgesehen, dass der Außentemperaturschwellwert zwischen 22°C und 27°C, vorzugsweise bei 25°C liegt und der positive Differenztemperaturschwellwert zwischen 2°C und 5°C, vorzugsweise bei 3°C. Es sei in diesem Zusammenhang nochmals betont, dass es für ein Aufschaukeln der Innentemperatur mitunter ausreicht, wenn nur die Differenz zwischen Außentemperatur und Innentemperatur größer gleich dem positiven Differenztemperaturschwellwert ist. Beispielsweise konnte bei Versuchen ein Aufschaukeln der Innentemperatur auch bei Außentemperaturen erreicht werden, die deutlich kleiner als die angegebenen Werte für den Außentemperaturschwellwert waren, wobei z.B. von einer Innentemperatur von 12°C ausgegangen wurde.

Umgekehrt ermöglicht es die Umschaltklappe auch, gezielt kühle Luft von außen anzusaugen, ggf. zu entfeuchten und in die Belüftungsbox einzublasen, wenn die Temperatur in der Belüftungsbox gezielt gesenkt werden soll. Daher ist es bei einer bevorzugten Ausführungsform des erfindungsgemäßen Verfahrens vorgesehen, dass die Umschaltklappe in die zweite Position bewegt oder in der zweiten Position gehalten wird, wenn die Differenz zwischen Außentemperatur und Innentemperatur kleiner gleich einem negativen Differenztemperaturschwellwert ist. Selbstverständlich ist es bei besonders einfach gestalteten Ausführungsformen natürlich auch denkbar, dass die Umschaltklappe in die zweite Position bewegt oder in der zweiten Position gehalten wird, wenn die Innentemperatur größer als ein gewisser Innentemperaturschwellwert ist und/oder die Außentemperatur kleiner als ein gewisser Außentemperaturschwellwert.

In Versuchen wurden negative Differenztemperaturschwellwerte ermittelt, welche eine zügige Reduktion der Innentemperatur gewährleisten. Demgemäß ist es bei einer besonders bevorzugten Ausführungsform des erfindungsgemäßen Verfahrens vorgesehen, dass der negative Differenztemperaturschwellwert zwischen -5°C und -2°C, vorzugsweise bei -3°C liegt.

Um zum Anwärmen der von außerhalb der Belüftungsbox ansaugbaren Luft Sonnenenergie optimal einzusetzen, ist es vorgesehen, dass unter dem Dach ein Luftkanal vorgesehen ist, um die in der zweiten Position von außerhalb der Belüftungsbox ansaugbare Luft unter dem Dach entlang zu leiten und Wärmeübertragung zwischen dem Dach und der Luft zu ermöglichen. Durch das Dach kann auf konstruktiv einfache Weise eine große Fläche zur Verfügung gestellt werden, die von der Sonne beschienen wird. Entsprechend kann die von außen angesaugte Luft selbst bei mäßiger Sonneneinstrahlung sehr gut angewärmt werden, bevor sie dem Luftentfeuchter zugeführt wird.

Um die Sonnenenergie effizient nutzen zu können, ist eine gute Wärmeleitung des Daches vorteilhaft. Entsprechend ist Blech eine gute Materialwahl. Zudem bieten Trapezbleche eine konstruktiv einfache und relativ kostengünstige Möglichkeit für die Ausbildung eines Daches. Daher ist es bei einer bevorzugten Ausführungsform der erfindungsgemäßen Vorrichtung vorgesehen, dass das Dach als Blechdach, vorzugsweise aus Trapezblechen ausgeführt ist.

Bei hinreichend hohen Außentemperaturen bzw. Temperaturen außerhalb der Belüftungsbox ist es ausreichend, die Luft ausschließlich von außen bzw. über den Luftkanal unter dem Dach anzusaugen, um trotzdem eine hinreichend hohe Temperatur in der Belüftungsbox zu realisieren. Entsprechend ist es bei einer bevorzugten Ausführungsform der erfindungsgemäßen Vorrichtung vorgesehen, dass in der zweiten Position die Luft lediglich von außerhalb der Belüftungsbox ansaugbar ist.

Um ein bequemes und automatisierbares Bewegen der Umschaltklappe zu ermöglichen, ist es bei einer bevorzugten Ausführungsform der erfindungsgemäßen Vorrichtung vorgesehen, dass ein Zylinder, vorzugsweise ein elektrischer Zylinder vorgesehen ist, um die Umschaltklappe zwischen der ersten Position und der zweiten Position hin und her zu bewegen. Selbstverständlich sind auch anders betriebene Zylinder denkbar, beispielsweise hydraulische oder pneumatische Zylinder.

Je nach relativer Luftfeuchtigkeit der von außen angesaugten Luft, kann mitunter auch darauf verzichtet werden, diese Luft mittels des Luftentfeuchters zu entfeuchten. Typischerweise muss der Luftentfeuchter erst bei einer relativen Luftfeuchtigkeit der von außen angesaugten Luft von mehr als 50% eingeschaltet werden. Hierbei besteht eine konstruktiv einfache Lösung darin, stets die gesamte angesaugte Luft durch den Luftentfeuchter zu führen und den Luftentfeuchter nur bei Bedarf einzuschalten. Dies ist unabhängig davon, in welcher Position sich die Umschaltklappe befindet, d.h. auch wenn keine Luft von außen, sondern nur aus der Belüftungsbox angesaugt wird. Daher ist es bei einer bevorzugten Ausführungsform der erfindungsgemäßen Vorrichtung vorgesehen, dass die gesamte angesaugte Luft dem Luftentfeuchter zuführbar ist.

Der Luftentfeuchter weist einen Verdampfer auf, in welchem Kältemittel durch die Wärme der angesaugten Luft verdampft wird, wodurch die angesaugte Luft wiederum unter den Taupunkt abgekühlt wird. Entsprechend kondensiert Wasser auf der kalten Oberfläche des Verdampfers und rinnt bzw. tropft vom Verdampfer ab. Um auf diese Weise möglichst die gesamte angesaugte Luft entfeuchten zu können, ist es vorgesehen, dass der Luftentfeuchter einen Verdampfer und einen Kondensator aufweist, wobei die dem Luftentfeuchter zugeführte Luft zumindest teilweise, vorzugsweise vollständig durch den Verdampfer führbar ist.

Es sei bemerkt, dass diese Art der Entfeuchtung auch dazu verwendet werden kann, das in der Belüftungsbox befindliche Trocknungsgut gezielt zu kühlen, indem die Luft, nachdem sie durch den Verdampfer geführt, entfeuchtet und gekühlt worden ist, ohne ein darauf folgendes Anwärmen direkt in die Belüftungsbox bzw. in den Anfangsbereich der Belüftungsbox eingeblasen wird.

Umgekehrt ist es für ein rasches Trocknen von Vorteil, die entfeuchtete Luft anzuwärmen, bevor sie in die Belüftungsbox eingeblasen wird. Daher ist es bei einer bevorzugten Ausführungsform des erfindungsgemäßen Verfahrens vorgesehen, dass die Luft, nachdem sie durch den Verdampfer geführt worden ist, angewärmt wird.

Soll die entfeuchtete Luft angewärmt werden, geschieht dies auf konstruktiv einfachstem Wege, indem die entfeuchtete Luft durch den Kondensator geleitet wird, in welchem das Kältemittel kondensiert und dabei latente Wärme abgibt, wodurch der Kondensator als Wärmequelle genutzt werden kann. Daher ist es bei einer bevorzugten Ausführungsform der erfindungsgemäßen Vorrichtung vorgesehen, dass der Verdampfer und Kondensator derart angeordnet sind, dass die dem Luftentfeuchter zugeführte Luft sowohl durch den Verdampfer als auch durch den Kondensator führbar ist. Somit kann auch in diesem Fall eine ohnehin vorhandene Wärmequelle, nämlich der Kondensator, für das Anwärmen der angesaugten bzw. in die Belüftungsbox einzublasenden Luft verwendet werden.

Darüberhinaus ist es selbstverständlich möglich, eine weitere Wärmequelle zum zusätzlichen Anwärmen der entfeuchteten Luft vorzusehen. Um eine besonders kompakte Anordnung zu realisieren, ist es bei einer bevorzugten Ausführungsform der erfindungsgemäßen Vorrichtung vorgesehen, dass zwischen Verdampfer und Kondensator eine Wärmequelle angeordnet ist, um die durch den Verdampfer durchgetretene Luft zusätzlich anzuwärmen.

Doch auch in diesem Fall, muss nicht unbedingt auf eine zusätzliche Heizung, z.B. eine zusätzliche elektrische Heizung, zurückgegriffen werden. Dies deshalb, da der Luftentfeuchter einen Kompressor umfasst, um das im Verdampfer verdampfte Kältemittel zu komprimieren. Da der Kompressor hierbei Wärme abgibt, eignet sich also auch der Kompressor als zusätzliche Wärmequelle, die zudem bequem zwischen Verdampfer und Kondensator untergebracht werden kann, ohne die Strömung der Luft vom Verdampfer zum Kondensator wesentlich zu beeinträchtigen. Daher ist es bei einer bevorzugten Ausführungsform der erfindungsgemäßen Vorrichtung vorgesehen, dass der Luftentfeuchter einen Kompressor umfasst, der zumindest teilweise, vorzugsweise vollständig die Wärmequelle ausbildet. Auch dies trägt zur Ausnutzung möglichst aller ohnehin vorhandenen Wärmequellen für das Anwärmen von angesaugter Luft bei.

Um den Trocknungsvorgang steuern zu können, ist es wünschenswert, den Luftdurchsatz einstellen zu können. Dies kann grundsätzlich durch eine Steuerung des Ventilators erfolgen, womit die Menge an angesaugter Luft und damit die Menge an in die Belüftungsbox eingeblasener Luft reguliert werden kann. Hierbei ist zu berücksichtigen, dass die Dichte an aufgebebenem Trocknungsgut variieren kann, womit ein unterschiedlicher Widerstand für die in die Belüftungsbox eingeblasene Luft einhergeht. Daher ist es bei einer bevorzugten Ausführungsform der erfindungsgemäßen Vorrichtung vorgesehen, dass der mindestens eine Ventilator eine Drehzahlsteuerung aufweist, um die angesaugte Luftmenge auf einen vorgegebenen Wert einzustellen. Auf diese Weise lassen sich beispielsweise im Falle von Heu als Trocknungsgut Mengen von angesaugter Luft bzw. Luftdurchsätze von 200 m³/h pro Quadratmeter Boxenfläche, m_{B}², bis 600 m³/h/m_{B}², vorzugsweise 400 m³/h/m_{B}² einstellen, wobei das Heu eine Dichte von typischerweise 100 kg/m³ bis 250 kg/m³ aufweisen kann.

Bevorzugt liegt das Heu im Wesentlichen lose in der Belüftungsbox vor, d.h. insbesondere nicht in Form von Rundballen. Selbstverständlich ist aber auch die Trocknung des Heus in Rundballenform möglich. In diesem Fall wird die anströmbare Boxenfläche auf jene Fläche beschränkt, auf der der bzw. die Rundballen aufliegt bzw. aufliegen. Dies kann bevorzugt so realisiert werden, dass jeweils ein zu trocknender Rundballen über jeweils einer Öffnung im Anfangsbereich der Belüftungsbox angeordnet wird, wobei die für das Trocknen verwendete Luft durch die Öffnung in die Belüftungsbox bzw. direkt auf den jeweiligen Rundballen eingeblasen wird. Die Öffnung kann als kreisrundes Loch ausgeführt sein und ist auf den Durchmesser der Rundballen angepasst, d.h. der Durchmesser der Öffnung entspricht im Wesentlichen dem Durchmesser des Rundballens und beträgt daher z.B. zwischen 1,2 m und 2 m. Damit der Rundballen nicht in die Öffnung hinein fällt, kann die Öffnung beispielsweise mit einem Gitter abgedeckt sein. Entsprechend ergeben sich in diesem Fall Luftdurchsätze von 850 m³/h bis 2000 m³/h pro Öffnung bzw. pro Rundballen.

Eine einfach zu realisierende Möglichkeit zur Steuerung der Drehzahl des Ventilators aber auch zur Leistung des Luftentfeuchters, wobei diese im Wesentlichen durch die Leistung des Kompressors bestimmt wird, bieten Frequenzumrichter. Daher ist es bei einer bevorzugten Ausführungsform der erfindungsgemäßen Vorrichtung vorgesehen, dass zur Steuerung des mindestens einen Ventilators und/oder des Luftentfeuchters Frequenzumrichter vorgesehen sind.

Um die Menge an angesaugter Luft messen zu können, ist es bei einer bevorzugten Ausführungsform der erfindungsgemäßen Vorrichtung vorgesehen, dass ein Sensor zur Messung der Geschwindigkeit der angesaugten Luft vorgesehen ist, der vorzugsweise im Luftentfeuchter hinter dem Verdampfer angeordnet ist. Das Messergebnis kann in der Folge als Regelgröße zur Steuerung des mindestens einen Ventilators verwendet werden. Die Anordnung des Sensors hinter dem Verdampfer hat den Vorteil, dass der Verdampfer einen gewissen Schutz für den Sensor vor Staub bietet. Zudem erweist sich diese Sensoranordnung als besonders günstig, wenn stets die gesamte angesaugte Luftmenge dem Luftentfeuchter zugeführt wird, auch wenn dieser nicht betrieben wird, da der Luftentfeuchter eine definierte Querschnittsfläche darstellt, durch die die angesaugte Luftmenge durchtreten muss. Da diese Querschnittsfläche bekannt ist, kann durch Messung der Luftgeschwindigkeit im Luftentfeuchter unmittelbar auf die Menge der angesaugten Luft pro Zeit geschlossen werden.

Weiters ist es bei einer besonders bevorzugten Ausführungsform der erfindungsgemäßen Vorrichtung vorgesehen, dass im Anfangsbereich ein Sensor zur Messung des Drucks der eingeblasenen Luft angeordnet ist. Die damit mögliche Überwachung des Drucks im Anfangsbereich bzw. des sich ergebenden Differenzdrucks zwischen Anfangsbereich und Endbereich kann beispielsweise dazu verwendet werden sicherzustellen, dass ein gewisser zulässiger Höchstdruck im Anfangsbereich bzw. eine gewisse höchstzulässige Druckdifferenz nicht überschritten wird. Dies kann dann auftreten, wenn die Dichte des Trocknungsguts zu hoch ist und den Luftdurchsatz zu stark beeinträchtigt. Gegebenenfalls kann somit der mindestens eine Ventilator entsprechend zurückgeregelt werden.

Um den Trocknungsvorgang zu überwachen und automatisieren zu können, ist es bei einer bevorzugten Ausführungsform der erfindungsgemäßen Vorrichtung vorgesehen, dass sowohl im Anfangsbereich als auch im Endbereich Sensoren zur Messung der Temperatur und der Luftfeuchtigkeit vorgesehen sind. Wie oben ausgeführt, kann durch Vergleich mit der Außentemperatur bzw. der Temperatur der von außerhalb der Belüftungsbox ansaugbaren Luft entschieden werden, ob die Umschaltklappe in eine andere als die aktuelle Position bewegt werden soll.

Um für eine Automatisierung des Trocknungsvorgangs die Signale sämtlicher Sensoren verarbeiten zu können, ist es bei einer bevorzugten Ausführungsform der erfindungsgemäßen Vorrichtung vorgesehen, dass eine Regel-Steuereinheit, die vorzugsweise als speicherprogrammierbare Steuerung ausgeführt ist, vorgesehen ist, mittels welcher der mindestens eine Ventilator, der Luftentfeuchter sowie die Umschaltklappe ansteuerbar und/oder regelbar sind. Die Ausführung als speicherprogrammierbare Steuerung ermöglicht es beispielsweise, die Menge an aktuell zu trocknenden Trocknungsgut zu berücksichtigen und Schwellwerte für Innentemperatur, Außentemperatur, Luftfeuchtigkeit und Luftdurchsatz vorzugeben bzw. anzupassen.

Die erfindungsgemäße Vorrichtung kann um weitere Belüftungsboxen erweitert werden, was ein intervallweises Trocknen des Trocknungsguts in den unterschiedlichen Belüftungsboxen ermöglicht. D.h. die angesaugte Luft wird vorzugsweise nicht in alle Belüftungsboxen gleichzeitig eingeblasen, sondern immer nur in eine Belüftungsbox, wobei nach einer gewissen vorgebbaren Zeit die Luft zur nächsten Belüftungsbox geleitet bzw. in die nächste Belüftungsbox eingeblasen wird. Daher ist es bei einer bevorzugten Ausführungsform der erfindungsgemäßen Vorrichtung vorgesehen, dass mehrere, vorzugsweise fünf Belüftungsboxen vorgesehen sind, wobei Luftleitmittel vorgesehen sind, um die Luft wahlweise zu einer bestimmten Belüftungsbox zu leiten.

Hierzu ist ein Luftkanal zum Anfangsbereich jeder Belüftungsbox vorgesehen sowie mindestens eine Luftleitklappe, um die Luft gezielt der gewünschten Belüftungsbox zuzuleiten. Selbstverständlich kann auch die mindestens eine Luftleitklappe mittels der Regel-Steuereinheit angesteuert werden.

Indem das Trocknungsgut auf zwei oder mehrere Belüftungsboxen aufgeteilt wird, können mitunter deutlich kürzere Trocknungszeiten erzielt werden als bei Trocknung derselben Menge an Trocknungsgut in nur einer Belüftungsbox. Grund hierfür ist zum einen, dass das Trocknungsgut weniger dicht in den einzelnen Belüftungsboxen angeordnet werden kann als in nur einer einzigen Belüftungsbox.

Zum anderen hat es sich gezeigt, dass Pflanzen, nachdem sie geschnitten worden sind, gespeichertes Wasser über Kapillarwirkung - zumindest über einen gewissen Zeitraum - kontinuierlich den Blättern zuführen, um eventuell noch eine Notreife bewirken zu können. Dies wiederum führt dazu, dass sich in einem ersten Zeitintervall, in dem das Heu z.B. in einer weiteren Belüftungsbox nicht getrocknet wird, eine erhöhte Feuchtigkeit in den Blättern bildet. Wenn nun in einem darauffolgenden zweiten Zeitintervall das Heu in dieser weiteren Belüftungsbox durch Einblasen von Luft getrocknet wird, wird insbesondere in einer relativ kurzen Anfangszeitspanne dieses zweiten Zeitintervalls eine erhöhte Menge an Feuchtigkeit dem Heu entzogen. Mit anderen Worten, indem das erste Zeitintervall lang zugewartet und erst dann getrocknet wird, wird in der relativ kurzen Anfangszeitspanne des zweiten Zeitintervalls derselbe Trocknungseffekt erzielt, wie wenn über das gesamte erste Zeitintervall kontinuierlich Luft zur Trocknung in die weitere Belüftungsbox eingeblasen worden wäre.

Umgekehrt wird nun während des zweiten Zeitintervalls keine Luft in eine erste - und/oder zweite und/oder dritte und/oder vierte und/oder fünfte und/oder noch darüberhinaus gehende - Belüftungsbox eingeblasen, sodass sich eine erhöhte Feuchtigkeit in den Blättern des Heus in dieser Belüftungsbox bzw. diesen Belüftungsboxen bilden kann und so fort.

Hierbei ist zu beachten, dass ein zu langes Zeitintervall, in dem keine Luft in eine gewisse Belüftungsbox eingeblasen wird, dazu führen kann, dass das zu trocknende Heu bzw. Trocknungsgut in dieser Belüftungsbox sich senkt und unerwünscht verdichtet. Hierzu haben Versuche ergeben, dass bei der intervallweisen Trocknung die Zeitintervalle ohne eingeblasene Luft nicht länger als zwei Stunden sein sollten.

In Versuchen mit Heu konnten durch intervallweises Trocknen Zeitersparnisse von bis zu 40% erzielt werden.

Selbstverständlich ist es aber auch denkbar, unterschiedliches Trocknungsgut in den unterschiedlichen Belüftungsboxen zu trocknen. Beispiele für unterschiedliches Trocknungsgut in den verschiedenen Belüftungsboxen wären: loses Heu; Heu in Rundballenform; Hackschnitzel; Hopfen; Getreide; Mais; Kräuter, insbesondere für Kräutertees; biogene Ausgangsmaterialien zur Erzeugung von Biogas; Schlachtabfälle oder Baustoffe.

Wie bereits erwähnt, kann mittels der erfindungsgemäßen Vorrichtung bzw. mittels des erfindungsgemäßen Verfahrens unterschiedlichste Trocknungsgüter getrocknet werden, vorzugsweise organische Trocknungsgüter. Entsprechend ist erfindungsgemäß die Verwendung einer erfindungsgemäßen Vorrichtung zum Trocknen von Heu vorgesehen. Auf diese Weise können die Nährstoffe im Heu erhalten werden, insbesondere wenn das Heu bereits mit einer Restfeuchte eingefahren wird. Das Heu behält seinen aromatischen Duft, was sich vorteilhaft bei der Verfütterung an Milchkühe auswirkt, da die Tiere besonders viel von diesem Heu fressen und in der Folge mehr Energie haben, gesünder sind und mehr Milchleistung bringen. Ebenso ist erfindungsgemäß die Verwendung einer erfindungsgemäßen Vorrichtung zum Trocknen von Lebensmitteln vorgesehen. Als Spezialfall hiervon kann Hopfen angesehen werden bzw. ist erfindungsgemäß die Verwendung einer erfindungsgemäßen Vorrichtung zum Trocknen von Hopfen vorgesehen. Die erfindungsgemäße Trocknung ermöglicht auch in diesem Fall einen maximalen Erhalt des Aromas der Lebensmittel bzw. des Hopfens.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Ansicht einer erfindungsgemäßen Vorrichtung zum Trocknen von Heu
- Fig. 2: eine schematische Ansicht eines Luftentfeuchters der erfindungsgemäßen Vorrichtung aus Fig. 1

### WEGE ZUR AUSFÜHRUNG DER ERFINDUNG

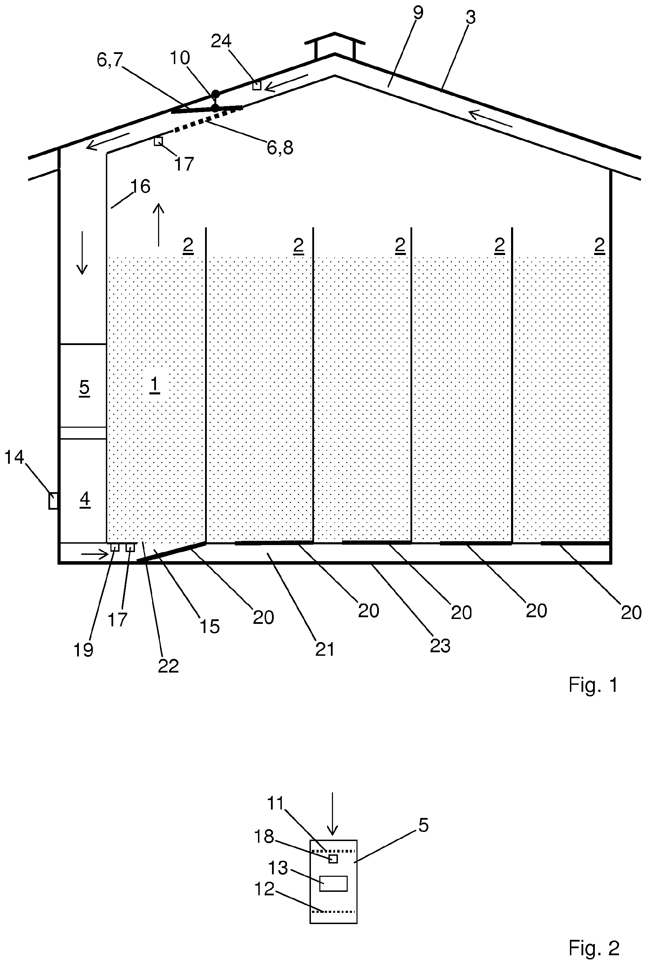

In der schematischen Ansicht der Fig. 1 ist eine erfindungsgemäße Vorrichtung zum Trocknen von Trocknungsgut dargestellt, wobei das Trocknungsgut in diesem Fall Heu 1 ist. Das Heu 1 ist in einer Belüftungsbox 2 zwischen einem Anfangsbereich 15 und einem Endbereich 16 angeordnet, wobei im gezeigten Ausführungsbeispiel das Heu 1 auf insgesamt fünf Belüftungsboxen 2 aufgeteilt ist. Die Belüftungsboxen 2 sind mit einem Dach 3 überdacht, sodass das Heu 1 vor Witterungseinflüssen geschützt ist.

In jeder Belüftungsbox 2 liegt das Heu 1 auf einer Boxenfläche 22 auf. Die Boxenfläche 22 ist mit Luft anströmbar, indem die Boxenfläche 22 beispielsweise durch ein Baustahlgitter (nicht dargestellt) realisiert wird, das auf Rostträgern (nicht dargestellt) aufliegt und in einem gewissen Abstand, beispielsweise 40 cm, über einem Boden 23 angeordnet ist. Hierdurch wird im Anfangsbereich 15 ein Luftkanal 21 ausgebildet, durch den Luft auf die Boxenfläche 22 bzw. in die Belüftungsbox 2 einblasbar ist.

Im gezeigten Ausführungsbeispiel kann die Luft wahlweise einer bestimmten Belüftungsbox 2 zugeführt werden. Hierzu ist jede Belüftungsbox 2 mit einer Luftleitklappe 20 ausgestattet, die die Boxenfläche 22 entweder verschließt oder die Luft auf die Boxenfläche 22 leitet. Die Luftleitklappen 20 und der Luftkanal 21 fungieren daher als Luftleitmittel, um die Luft wahlweise zu einer bestimmten Belüftungsbox 2 zu leiten.

Um die Luft in bzw. durch die Belüftungsboxen 2 zu blasen, weist die in Fig. 1 gezeigte Vorrichtung einen Ventilator 4 auf, wobei die Pfeile in Fig. 1 mögliche Luftströme symbolisieren. Die in die Belüftungsboxen 2 einzublasende Luft wird zunächst mittels des Ventilators 4 angesaugt, wobei vorzugsweise die gesamte angesaugte Luft durch einen Luftentfeuchter 5 gesaugt wird, in welchem Luftentfeuchter 5 die Luft entfeuchtet wird.

Erfindungsgemäß weist die Vorrichtung eine Umschaltklappe 6 auf, die im Endbereich 16 angeordnet ist und mittels eines elektrischen Zylinders 10 zwischen einer ersten Position 7 und einer zweiten Position 8 hin und her bewegt werden kann. In der in Fig. 1 gezeigten ersten Position 7 bewirkt die Umschaltklappe 6, dass Luft lediglich aus den Belüftungsboxen 2 angesaugt werden kann. Diese Luft wird in der Folge dem Luftentfeuchter 5 zugeführt und wieder in eine ausgewählte Belüftungsbox 2 eingeblasen. D.h. es liegt in diesem Fall ein geschlossener Luftkreislauf in der Vorrichtung vor.

In der zweiten Position 8 hingegen, die in Fig. 1 durch die strichlierte Linie angedeutet ist, wird die Luft vorzugsweise vollständig von außen bzw. von außerhalb der Belüftungsboxen 2 angesaugt. Konkret ist hierfür ein Luftkanal 9 unter dem Dach 3 ausgebildet. Durch das Entlangführen der von außen angesaugten Luft unter dem Dach 3 wird eine Wärmeübertragung zwischen dieser Luft und dem Dach 3 begünstigt. Wenn das Dach 3 aufgrund der Sonneneinstrahlung warm ist, kann auf diese Weise die von außen angesaugte Luft - letztlich durch Sonnenenergie - angewärmt werden. Um die Sonnenenergie besonders effizient nutzen zu können, ist eine gute Wärmeleitung des Daches 3 vorteilhaft, weshalb das Dach 3 vorzugsweise aus Blech, besonders bevorzugt aus Trapezblechen ausgeführt ist. Die Umschaltklappe 6 ermöglicht es somit, von außen ansaugbare Luft gezielt einzusetzen, um zum Erreichen einer gewünschten Temperatur der Luft in der Belüftungsbox 2 bzw. in deren Anfangsbereich 15 und/oder Endbereich 16, d.h. zum Erreichen einer gewünschten Innentemperatur, beizutragen.

Zur Kontrolle der Innentemperatur sowie der Luftfeuchtigkeit in der Belüftungsbox 2 bzw. des Trocknungsfortschritts sind Sensoren 17 im Anfangsbereich 15 und im Endbereich 16 vorgesehen. Darüberhinaus ist ein Temperaturfühler 24 im Luftkanal 9 vor der Umschaltklappe 6 vorgesehen, um eine Außentemperatur der von außen angesaugten Luft zu messen. Natürlich sind Ausführungsvarianten denkbar, in denen statt des Temperaturfühlers 24 ein Sensor 17 verwendet wird, um außerdem die relative Luftfeuchtigkeit der von außen angesaugten Luft direkt im Luftkanal 9 zu messen. Außentemperatur und Innentemperatur können miteinander verglichen werden.

Soll nun beispielsweise die Luft in der Belüftungsbox 2 angewärmt werden, um eine schnellere Trocknung zu ermöglichen, wird die Außentemperatur mit der Innentemperatur, vorzugsweise im Endbereich 16, verglichen. Ist die Differenz zwischen Außentemperatur und Innentemperatur größer als ein vorgebbarer positiver Differenztemperaturschwellwert, z.B. 3°C, wird die Umschaltklappe 6 in die zweite Position 8 gebracht, um gezielt warme Luft von außerhalb der Belüftungsbox 2 anzusaugen.

Es sei bemerkt, dass je nach relativer Luftfeuchtigkeit der von außen angesaugten Luft mitunter auch darauf verzichtet werden kann, diese Luft mittels des Luftentfeuchters 5 zu entfeuchten. Typischerweise muss der Luftentfeuchter 5 erst bei einer relativen Luftfeuchtigkeit der von außen angesaugten Luft von mehr als 50% eingeschaltet werden.

Ist die Differenz zwischen Außentemperatur und Innentemperatur hingegen nicht groß genug oder gar negativ, wird die Umschaltklappe 6 in die erste Position 7 gebracht, um eine Abkühlung der Luft im Inneren der Belüftungsbox 2 zu vermeiden.

Allerdings kann die Luft in der Belüftungsbox 2 bzw. das Trocknungsgut natürlich auch gezielt gekühlt werden, indem die Umschaltklappe 6 in die zweite Position 8 gebracht wird, wenn die Differenz von Außentemperatur und Innentemperatur negativ ist.

Ist die von außen angesaugte Luft nicht warm genug oder soll die Innentemperatur schneller angehoben werden, können weitere, ohnehin vorhandene Wärmequellen zum Anwärmen der Luft genutzt werden. Hierzu bietet sich der Luftentfeuchter 5 an, der in Fig. 2 schematisch gezeigt ist, wobei der Pfeil die Strömungsrichtung der Luft anzeigt. Der Luftentfeuchter 5 weist einen Verdampfer 11 auf, in welchem Kältemittel (nicht dargestellt) durch die Wärme der angesaugten Luft verdampft wird. Hierdurch wird die angesaugte Luft unter den Taupunkt abgekühlt, und Wasser kondensiert auf der kalten Oberfläche des Verdampfers 11, von wo es abrinnt bzw. abtropft. Weiters weist der Luftentfeuchter 5 einen Kondensator 12 auf, in welchem das Kältemittel kondensiert und dabei latente Wärme abgibt. Hierdurch kann der Kondensator 12 als Wärmequelle zum Anwärmen der entfeuchteten Luft genutzt werden, in dem die Luft, nachdem sie den Verdampfer 11 passiert hat und entfeuchtet worden ist, auch durch den Kondensator 12 gesaugt wird.

Darüberhinaus umfasst der Luftentfeuchter 5 einen Kompressor 13, um das im Verdampfer 11 verdampfte Kältemittel zu komprimieren. Da der Kompressor 13 hierbei Wärme abgibt, eignet sich auch der Kompressor 13 als zusätzliche Wärmequelle, die zudem bequem zwischen Verdampfer 11 und Kondensator 12 angeordnet werden kann, ohne die Strömung der Luft vom Verdampfer 11 zum Kondensator 12 wesentlich zu beeinträchtigen, siehe Fig. 2.

Durch Nutzung des Kondensators 12 sowie des Kompressors 13 als - ohnehin vorhandene - Wärmequellen, kann die Innentemperatur auch dann angehoben werden, wenn die Außentemperatur kleiner als die Innentemperatur ist. In diesem Fall wird die Umschaltklappe 6 in die erste Position 7 bewegt und kann dort belassen werden, z.B. solange die Innentemperatur nicht einen vorgebbaren Innentemperaturschwellwert übersteigt.

Versuche haben gezeigt, dass durch gezielte Nutzung des Kondensators 12 sowie des Kompressors 13 als ohnehin vorhandene Wärmequellen auf zusätzliche Wärmequellen, etwa in Form einer zusätzlichen elektrischen Heizung, zumeist gänzlich verzichtet werden kann und dennoch hervorragende Trocknungsergebnisse bzw. hohe Trocknungseffekte erzielt werden.

Ein weiterer zu beachtender Punkt bei der Steuerung des Trocknungsvorgangs ist der Luftdurchsatz. Der Luftdurchsatz kann durch eine Steuerung des Ventilators 4 beeinflusst werden, d.h. die Menge an angesaugter Luft und damit die Menge an in die Belüftungsboxen 2 eingeblasener Luft kann reguliert werden. Üblicherweise sollen Luftdurchsätze bzw. Mengen an angesaugter Luft von 200 m³/h pro Quadratmeter Boxenfläche 22, m_{B}², bis 600 m³/h/m_{B}², vorzugsweise 400 m³/h/m_{B}² eingestellt werden. Hierbei ist zu berücksichtigen, dass die Dichte des Heus 1 variieren kann - typischerweise zwischen 100 kg/m³ bis 250 kg/m³ -, womit ein unterschiedlicher Widerstand für die in die Belüftungsboxen 2 eingeblasene Luft einhergeht. Entsprechend muss die Leistung bzw. die Drehzahl des Ventilators 4 steuerbar sein, wobei hierfür erfindungsgemäß Frequenzumrichter vorgesehen sind (nicht dargestellt). Vorzugsweise werden Frequenzumrichter außerdem auch zur Steuerung der Leistung Luftentfeuchters 5 bzw. des Kompressors 13 des Luftentfeuchters 5 eingesetzt.

Zur Bestimmung des Luftdurchsatzes bzw. der angesaugten Luftmenge ist ein Sensor 18 zur Messung der Geschwindigkeit der angesaugten Luft vorgesehen, der vorzugsweise im Luftentfeuchter 5, hinter dem Verdampfer 11 angeordnet ist. Da der von der Luft durchströmbare Querschnitt des Luftentfeuchters 5 bekannt ist, ergibt sich daraus unmittelbar der Luftdurchsatz.

Weiters ist zur Überwachung des Drucks der Luft, die in die Belüftungsboxen 2 eingeblasen wird, im Anfangsbereich 15 ein Drucksensor 19 angeordnet. Die damit mögliche Überwachung des Drucks im Anfangsbereich 15 bzw. des sich ergebenden Differenzdrucks zwischen Anfangsbereich 15 und Endbereich 16 kann beispielsweise dazu verwendet werden sicherzustellen, dass ein gewisser zulässiger Höchstdruck im Anfangsbereich 15 bzw. eine gewisse höchstzulässige Druckdifferenz nicht überschritten wird. Dies kann dann auftreten, wenn die Dichte des Heus 1 zu hoch ist und den Luftdurchsatz zu stark beeinträchtigt. Gegebenenfalls kann somit der Ventilator 4 entsprechend zurückgeregelt werden.

Sämtliche Regel- und Steuervorgänge werden im gezeigten Ausführungsbeispiel durch eine Regel-Steuereinheit 14 kontrolliert, siehe Fig. 1, die als speicherprogrammierbare Steuerung ausgeführt ist. Die Regel-Steuereinheit 14 verarbeitet die Signale sämtlicher Sensoren 17, des Temperaturfühlers 18 sowie des Drucksensors 19. Die Ausführung der Regel-Steuereinheit 14 als speicherprogrammierbare Steuerung ermöglicht es zudem, die aktuelle Menge des zu trocknenden Heus 1 zu berücksichtigen und Schwellwerte für Innentemperatur, Außentemperatur, Luftfeuchtigkeit und Luftdurchsatz vorzugeben bzw. anzupassen. Basierend auf diesen Daten bzw. Angaben steuert die Regel-Steuereinheit 14 die Umschaltklappe 6 an und regelt die Leistung des Ventilators 4 sowie des Entlüfters 5. Zudem kann die Regel-Steuereinheit 14 die Luftleitklappen 20 ansteuern, um ein intervallweises Trocknen des Heus 1 in den einzelnen Belüftungsboxen 2 zu ermöglichen. Auf diese Weise wird die Trocknung des Heus 1 hochgradig automatisiert und optimiert durchgeführt.

### BEZUGSZEICHENLISTE

- 1: Heu
- 2: Belüftungsbox
- 3: Dach
- 4: Ventilator
- 5: Luftentfeuchter
- 6: Umschaltklappe
- 7: Erste Position der Umschaltklappe
- 8: Zweite Position der Umschaltklappe
- 9: Luftkanal
- 10: Elektrischer Zylinder
- 11: Verdampfer
- 12: Kondensator
- 13: Kompressor
- 14: Regel-Steuereinheit
- 15: Anfangsbereich
- 16: Endbereich
- 17: Sensor zur Messung von Temperatur und Luftfeuchtigkeit
- 18: Sensor zur Messung der Geschwindigkeit der angesaugten Luft
- 19: Drucksensor
- 20: Luftleitklappe
- 21: Luftkanal im Anfangsbereich
- 22: Boxenfläche
- 23: Boden
- 24: Temperaturfühler

## Patentansprüche

1. Vorrichtung zum Trocknen von Trocknungsgut (1), umfassend eine Belüftungsbox (2) zur Aufnahme des Trocknungsguts (1), wobei die Belüftungsbox (2) mit einem Dach (3) überdacht ist, die Vorrichtung weiters umfassend zumindest einen Ventilator (4), durch welchen Ventilator (4) Luft ansaugbar ist, wobei die angesaugte Luft zumindest teilweise einem Luftentfeuchter (5) zuführbar ist, um die Luft zu entfeuchten, und wobei mittels des mindestens einen Ventilators (4) die Luft schließlich durch die Belüftungsbox (2), von einem Anfangsbereich (15) zu einem Endbereich (16) der Belüftungsbox (2) blasbar ist, wobei das Trocknungsgut (1) zwischen Anfangsbereich (15) und Endbereich (16) auf einer durch die Luft anströmbaren Boxenfläche (22) anordenbar ist, wobei eine Umschaltklappe (6) vorgesehen ist, die von einer ersten Position (7) in eine zweite Position (8) bewegbar ist, wobei in der ersten Position (7) die Luft durch den mindestens einen Ventilator (4) lediglich aus der Belüftungsbox (2) ansaugbar ist, um einen geschlossenen Luftkreislauf in der Vorrichtung auszubilden, und wobei in der zweiten Position (8) die Luft zumindest teilweise von außerhalb der Belüftungsbox (2) ansaugbar ist, wobei unter dem Dach (3) ein Luftkanal (9) vorgesehen ist, um die in der zweiten Position (8) von außerhalb der Belüftungsbox (2) ansaugbare Luft unter dem Dach (3) entlang zu leiten und Wärmeübertragung zwischen dem Dach (3) und der Luft zu ermöglichen, wobei der Luftentfeuchter (5) einen Verdampfer (11) und einen Kondensator (12) aufweist, wobei die dem Luftentfeuchter (5) zugeführte Luft zumindest teilweise, vorzugsweise vollständig durch den Verdampfer (11) führbar ist, **dadurch gekennzeichnet, dass** zwischen Verdampfer (11) und Kondensator (12) eine Wärmequelle angeordnet ist, um die durch den Verdampfer (11) durchgetretene Luft zusätzlich anzuwärmen, und dass ein Sensor (18) zur Messung der Geschwindigkeit der angesaugten Luft vorgesehen ist, der im Luftentfeuchter (5) hinter dem Verdampfer (11) angeordnet ist, und dass Mittel zur Messung einer Außentemperatur der von außerhalb der Belüftungsbox (2) ansaugbaren Luft und/oder einer Innentemperatur der in der Belüftungsbox (2) befindlichen Luft vorgesehen sind.

2. Vorrichtung nach Anspruch 1, **dadurch gekennzeichnet, dass** das Dach (3) als Blechdach, vorzugsweise aus Trapezblechen ausgeführt ist.

3. Vorrichtung nach einem der Ansprüche 1 bis 2, **dadurch gekennzeichnet, dass** ein Zylinder, vorzugsweise ein elektrischer Zylinder (10) vorgesehen ist, um die Umschaltklappe (6) zwischen der ersten Position (7) und der zweiten Position (8) hin und her zu bewegen.

4. Vorrichtung nach einem der Ansprüche 1 bis 3, **dadurch gekennzeichnet, dass** der Luftentfeuchter (5) einen Kompressor (13) umfasst, der zumindest teilweise, vorzugsweise vollständig die Wärmequelle ausbildet.

5. Vorrichtung nach einem der Ansprüche 1 bis 4, **dadurch gekennzeichnet, dass** der mindestens eine Ventilator (4) eine Drehzahlsteuerung aufweist, um die angesaugte Luftmenge auf einen vorgegebenen Wert einzustellen.

6. Vorrichtung nach einem der Ansprüche 1 bis 5, **dadurch gekennzeichnet, dass** zur Steuerung des mindestens einen Ventilators (4) und/oder des Luftentfeuchters (5) Frequenzumrichter vorgesehen sind.

7. Vorrichtung nach einem der Ansprüche 1 bis 6, **dadurch gekennzeichnet, dass** im Anfangsbereich (15) ein Sensor (19) zur Messung des Drucks der eingeblasenen Luft angeordnet ist.

8. Vorrichtung nach einem der Ansprüche 1 bis 7, **dadurch gekennzeichnet, dass** eine Regel-Steuereinheit (14), die vorzugsweise als speicherprogrammierbare Steuerung ausgeführt ist, vorgesehen ist, mittels welcher der mindestens eine Ventilator (4), der Luftentfeuchter (5) sowie die Umschaltklappe (6) ansteuerbar und/oder regelbar sind.

9. Vorrichtung nach einem der Ansprüche 1 bis 8, **dadurch gekennzeichnet, dass** mehrere, vorzugsweise fünf Belüftungsboxen (2) vorgesehen sind, wobei Luftleitmittel (20, 21) vorgesehen sind, um die Luft wahlweise zu einer bestimmten Belüftungsbox (2) zu leiten.

10. Verfahren zum Trocknen von Trocknungsgut (1), wobei eine Vorrichtung nach einem der Ansprüche 1 bis 9 verwendet wird und das Trocknungsgut (1) in die Belüftungsbox (2) aufgegeben wird und wobei eine Außentemperatur der von außerhalb der Belüftungsbox (2) ansaugbaren Luft gemessen wird, wobei eine Innentemperatur der in der Belüftungsbox (2) befindlichen Luft, vorzugsweise im Endbereich (16) gemessen wird und wobei die Umschaltkappe (6) in Abhängigkeit von der Außentemperatur und/oder der Innentemperatur und/oder der Differenz zwischen der Außentemperatur und der Innentemperatur von der ersten Position (7) in die zweite Position (8) und umgekehrt bewegt wird.

11. Verfahren nach Anspruch 10, **dadurch gekennzeichnet, dass** die Umschaltklappe (6) in die zweite Position (8) bewegt oder in der zweiten Position (8) gehalten wird, wenn die Außentemperatur größer gleich einem Außentemperaturschwellwert ist und/oder wenn die Differenz zwischen Außentemperatur und Innentemperatur größer gleich einem positiven Differenztemperaturschwellwert ist.

12. Verfahren nach Anspruch 11, **dadurch gekennzeichnet, dass** die Umschaltklappe (6) in die zweite Position (8) bewegt oder in der zweiten Position (8) gehalten wird, wenn die Differenz zwischen Außentemperatur und Innentemperatur kleiner gleich einem negativen Differenztemperaturschwellwert ist.

13. Verfahren nach einem der Ansprüche 10 bis 12, **dadurch gekennzeichnet, dass** die Luft, nachdem sie durch den Verdampfer (11) geführt worden ist, angewärmt wird.

## Claims

1. Device for drying material to be dried (1), comprising a ventilation box (2) for receiving the material to be dried (1), wherein the ventilation box (2) is covered with a roof (3), the device further comprising at least one fan (4), by means of which fan (4) air can be sucked in, wherein the aspirated air can be supplied at least partially to an air dehumidifier (5) in order to dehumidify the air, and wherein by means of the at least one fan (4) the air can finally be blown through the ventilation box (2) from an initial region (15) to an end region (16) of the ventilation box (2), wherein the material to be dried (1) can be arranged between the initial region (15) and the end region (16) on a box surface (22) which can be approached by the air flow, wherein a switching flap (6) is provided, which is movable from a first position (7) to a second position (8), wherein in the first position (7) the air can be sucked in by the at least one fan (4) only from the ventilation box (2) to form a closed air circuit in the device, and wherein in the second position (8) the air can be at least partially sucked in from outside the ventilation box (2), wherein an air duct (9) is provided under the roof (3) in order to guide the air that can be sucked in in the second position (8) from outside the ventilation box (2) along under the roof (3) and to enable heat transfer between the roof (3) and the air, wherein the air dehumidifier (5) has an evaporator (11) and a condenser (12), wherein the air supplied to the air dehumidifier (5) can be guided at least partially, preferably completely, through the evaporator (11), **characterized in that** a heat source is arranged between evaporator (11) and condenser (12) in order to additionally heat the air which has passed through the evaporator (11), and **in that** a sensor (18) for measuring the speed of the aspirated air is provided which is arranged in the air dehumidifier (5) behind the evaporator (11), and **in that** means are provided for measuring an outside temperature of the air which can be sucked in from outside the ventilation box (2) and/or an inside temperature of the air located in the ventilation box (2).

2. Device according to claim 1, **characterized in that** the roof (3) is designed as a sheet metal roof, preferably made of trapezoidal sheets.

3. Device according to one of claims 1 to 2, **characterized in that** a cylinder, preferably an electric cylinder (10), is provided for moving the switching flap (6) back and forth between the first position (7) and the second position (8).

4. Device according to one of claims 1 to 3, **characterized in that** the dehumidifier (5) comprises a compressor (13) which at least partially, preferably completely, forms the heat source.

5. Device according to one of claims 1 to 4, **characterized in that** the at least one fan (4) has a speed control for adjusting the aspirated air quantity to a predetermined value.

6. Device according to one of claims 1 to 5, **characterized in that** frequency converters are provided for controlling the at least one fan (4) and/or the air dehumidifier (5).

7. Device according to one of claims 1 to 6, **characterized in that** a sensor (19) for measuring the pressure of the blown-in air is arranged in the initial region (15).

8. Device according to one of claims 1 to 7, **characterized in that** a regulating and control unit (14) is provided, which is preferably designed as a programmable logic controller and by means of which the at least one fan (4), the air dehumidifier (5) and the switching flap (6) can be controlled and/or regulated.

9. Device according to one of claims 1 to 8, **characterized in that** a plurality of ventilation boxes (2), preferably five thereof, are provided, wherein air guide means (20, 21) are provided to guide the air selectively to a specific ventilation box (2).

10. Method for drying material to be dried (1), wherein a device according to one of claims 1 to 9 is used and the material to be dried (1) is fed into the ventilation box (2), and wherein an outside temperature of the air that can be sucked in from outside the ventilation box (2) is measured, wherein an inside temperature of the air located in the ventilation box (2), preferably in the end region (16), is measured, and wherein the switching flap (6) is moved from the first position (7) to the second position (8) and vice versa as a function of the outside temperature and/or the inside temperature and/or the difference between the outside temperature and the inside temperature.

11. Method according to claim 10, **characterized in that** the switching flap (6) is moved into the second position (8) or held in the second position (8) when the outside temperature is greater than or equal to an outside temperature threshold value and/or when the difference between the outside temperature and the inside temperature is greater than or equal to a positive difference temperature threshold value.

12. Method according to claim 11, **characterized in that** the switching flap (6) is moved into the second position (8) or held in the second position (8) when the difference between outside temperature and inside temperature is less than or equal to a negative difference temperature threshold value.

13. Method according to one of claims 10 to 12, **characterized in that** the air is heated after it has been guided through the evaporator (11).

## Revendications

1. Dispositif de séchage d'une matière à sécher (1), comprenant un caisson de ventilation (2) destiné à recevoir la matière à sécher (1), le caisson de ventilation (2) étant recouvert d'un toit (3), le dispositif comprenant en outre au moins un ventilateur (4), par lequel ventilateur (4) de l'air peut être aspiré, l'air aspiré pouvant être amené au moins en partie à un déshumidificateur d'air (5) afin de déshumidifier l'air, et l'air pouvant finalement être soufflé à travers le caisson de ventilation (2), d'une zone initiale (15) vers une zone terminale (16) du caisson de ventilation (2), au moyen dudit au moins un ventilateur (4), la matière à sécher (1) pouvant être disposée entre la zone initiale (15) et la zone terminale (16) sur une surface de caisson (22), la surface de caisson (22) pouvant être exposée au flux d'air, un volet inverseur (6) étant prévu, qui peut être déplacé d'une première position (7) dans une deuxième position (8), dans lequel, dans la première position (7), l'air peut être aspiré par ledit au moins un ventilateur (4) uniquement depuis le caisson de ventilation (2) pour former un circuit d'air fermé dans le dispositif, et dans lequel, dans la deuxième position (8), l'air peut être au moins en partie aspiré de l'extérieur du caisson de ventilation (2), un conduit d'air (9) étant prévu sous le toit (3) afin de guider le long du toit (3) l'air pouvant, dans la deuxième position (8), être aspiré de l'extérieur du caisson de ventilation (2) et permettre un transfert de chaleur entre le toit (3) et l'air, le déshumidificateur d'air (5) comprenant un évaporateur (11) et un condenseur (12), l'air amené au déshumidificateur d'air (5) pouvant être guidé au moins en partie, de préférence en totalité, à travers l'évaporateur (11), **caractérisé en ce qu'**une source de chaleur est disposée entre l'évaporateur (11) et le condenseur (12) pour chauffer en plus l'air qui a traversé l'évaporateur (11), qu'il est prévu un capteur (18) pour mesurer la vitesse de l'air aspiré, qui est disposé dans le déshumidificateur d'air (5) derrière l'évaporateur (11), et qu'il est prévu des moyens pour mesurer une température extérieure de l'air pouvant être aspiré de l'extérieur du caisson de ventilation (2) et/ou une température intérieure de l'air se trouvant dans le caisson de ventilation (2).

2. Dispositif selon la revendication 1, **caractérisé en ce que** le toit (3) est réalisé sous la forme d'un toit en tôle, de préférence en tôles trapézoïdales.

3. Dispositif selon l'une des revendications 1 à 2, **caractérisé en ce qu'**un vérin, de préférence un vérin électrique (10), est prévu pour déplacer alternativement le volet inverseur (6) entre la première position (7) et la deuxième position (8).

4. Dispositif selon l'une des revendications 1 à 3, **caractérisé en ce que** le déshumidificateur (5) comprend un compresseur (13) qui constitue au moins en partie, de préférence en totalité, la source de chaleur.

5. Dispositif selon l'une des revendications 1 à 4, **caractérisé en ce que** ledit au moins un ventilateur (4) présente une commande de vitesse de rotation pour régler la quantité d'air aspiré à une valeur prédéfinie.

6. Dispositif selon l'une des revendications 1 à 5, **caractérisé en ce que** des variateurs de fréquence sont prévus pour commander ledit au moins un ventilateur (4) et/ou le déshumidificateur d'air (5).

7. Dispositif selon l'une des revendications 1 à 6, **caractérisé en ce qu'**un capteur (19) pour mesurer la pression de l'air insufflé est disposé dans la zone initiale (15).

8. Dispositif selon l'une des revendications 1 à 7, **caractérisé en ce qu'**il est prévu une unité de commande et régulation (14), qui est réalisée de préférence sous la forme d'un automate programmable à mémoire, au moyen de laquelle ledit au moins un ventilateur (4), le déshumidificateur d'air (5) et le volet inverseur (6) peuvent être commandés et/ou régulés.

9. Dispositif selon l'une des revendications 1 à 8, **caractérisé en ce que** plusieurs, de préférence cinq, caissons de ventilation (2) sont prévus, des moyens de guidage d'air (20, 21) étant prévus pour guider l'air sélectivement vers un caisson de ventilation défini (2).

10. Procédé de séchage d'une matière à sécher (1), dans lequel un dispositif selon l'une des revendications 1 à 9 est utilisé et la matière à sécher (1) est introduite dans le caisson de ventilation (2), dans lequel une température extérieure de l'air pouvant être aspiré de l'extérieur du caisson de ventilation (2) est mesurée, dans lequel une température intérieure de l'air se trouvant dans le caisson de ventilation (2) est mesurée, de préférence dans la zone terminale (16), et dans lequel le volet inverseur (6) est déplacé de la première position (7) dans la deuxième position (8) et inversement en fonction de la température extérieure et/ou de la température intérieure et/ou de la différence entre la température extérieure et la température intérieure.

11. Procédé selon la revendication 10, **caractérisé en ce que** le volet inverseur (6) est déplacé dans la deuxième position (8) ou maintenu dans la deuxième position (8) lorsque la température extérieure est supérieure ou égale à une valeur seuil de température extérieure et/ou lorsque la différence entre la température extérieure et la température intérieure est supérieure ou égale à une valeur seuil de température différentielle positive.

12. Procédé selon la revendication 11, **caractérisé en ce que** le volet inverseur (6) est déplacé dans la deuxième position (8) ou maintenu dans la deuxième position (8) lorsque la différence entre la température extérieure et la température intérieure est inférieure ou égale à une valeur seuil de température différentielle négative.

13. Procédé selon l'une des revendications 10 à 12, **caractérisé en ce que** l'air est chauffé après avoir été guidé à travers l'évaporateur (11).
